# EUROPEAN PATENT APPLICATION

(11) **EP 2 128 683 A1**
(43) Date of publication of application: **02.12.2009**
(21) Application number: 09380103.3
(22) Date of filing: 19.05.2009
(51) Int. Cl.: G02C 9/02

(54) **Double spectacle frame**

(30) Priority: 28.05.2008 ES 200801585
(71) Applicant: Bravo Diaz, Rosa Patricia, 05146 Blascomillá, Avila (ES)
(72) Inventor: Bravo Diaz, Rosa Patricia, 05146 Blascomillá, Avila (ES)

(57) **Abstract**

This invention consists on the joint of two spectacle frames "A" an "B". "A" is sensibly smaller than "B" to let they round in both directions. They can be closed as a common frame and keep in any case.

The ends of the arms are wider and plainer. Moreover they are drilled to introduce two screws to fix it. They are de axis frame and they join the arms two by two at the same time. They also have hexagonal lowering to fasten the screws and nuts avoiding any friction.

Between the arms, a small washer avoids their erosion by routing.

## Description

This invention belongs to the area of technical methods and mechanism of adding auxiliary spectacles or multipurpose glasses.

Nowadays, in the technical way, in the auxiliary spectacles or multipurpose area, many inventions can be found such as: spectacles based on fixing cylindrical magnets, with rotating axis, clips...

However, all of these methods of invention are based on producing only one frame which holds the weight of the auxiliary spectacles. This makes the glasses be less comfortable, due to the weight of all the frame fall on the nose. Moreover, in the end these spectacles are lost easily.

Even more, in this time there is no frame which allows you to exchange your sunglasses with multifocal lenses - in use more and more- without looking through two glasses.

The double glasses frame invention tries to get at diminution in the frame loss, being exchanged constantly. They have more comfort and rapidity in the moment to be used and exchanged, because you have always two options handy. It permits you the use of one spectacle case. They can be put together, so they occupy less space.

The explanation of this invention consists on the joint of two frames in the end of its arms through some screws. They make possible the movement in both directions, to be able to use the necessary glasses in the right moment and the others on the head. This lets you avoid the weight on the nose.

The frame (1) is sensibly smaller than the frame (2) and in that way it makes possible to fix perfectly when they are closed.

The double frame mechanism is based on the joint of the frame (1) equipped with sunglasses (A) and the frame (2) with multifocal lenses (B). These frames present in their arms a widening in their ends (3) that make feasible a better fastening and strength by joining by a screw (4) both arms. This screw (4), which works as an axis, has some grooves in its internal part of the head so that it does not slacken. The screw (4) is cloistered in its hexagonal lowering (7), located in the end of the arms (3). It goes through the frame (1), trough the washer (6) which lets the frame round without an excessive wearing away. It joins the frame (2) by a nut (5) which at the same time is also cloistered in its hexagonal lowering (7). This hexagonal lowering (7) avoids the nut and the screw to be slackened.

According to the example in the way of realizing, this invention consists in the joint of two frames equipped with sunglasses (A), the frame (1) and the frame (2) with multifocal lenses (B). These are fixed getting a perfect movement in both directions due to two small screws that join the arm two by two in their ends.

These screws, with their respective nuts, are located in some hexagonal lowering which let a better comfort, because they avoid any friction.

These hexagonal lowering do not let the nuts movement and avoid their loss and make feasible a better frame fastening.

Other way to realize this would be based on using two cylindrical magnets instead of the screws, letting take part and separate the frames in any moment.

Other way to realize this, but less preferable, would be based on some hook and eye connection like frame axis.

The industrial application of this invention is the perfect option for people who are actually wearing multifocal lenses and want to wear sunglasses at the same time. But it can be a complementary frame for any other glasses. This avoids the use of two different frames and the frame loss.

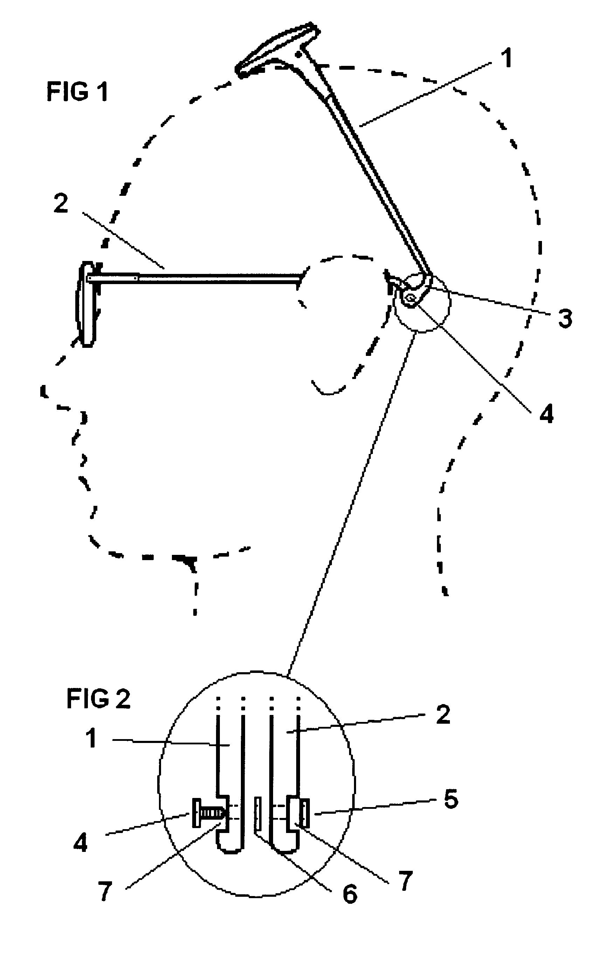

## Claims

1. Disposition of the double frame in which is fitted some glasses (A) in the frame (1) to other (B) in the frame (2) **characterized** because a frame (2) is sensibly smaller than (1) letting its perfect fastening when they are closed.

2. Fastening disposition according to claim 1 **characterized** because the frame has two screws (4) which are located in both ends of the arms (3) making round on themselves.

3. Fastening disposition according to claim 2 **characterized** because the arms (3) are in their end wider and plainer where the axis or screw (4) is located to let a correct frame movement.

4. Fastening disposition according to claim 3 **characterized** because in the ends of the arms (3) there is a drill in which the screws are located.

5. Fastening disposition according to claim 2 **characterized** because each screw (4) and nut (5) are located in both hexagonal lowering (7) so that they do not move and bother. In that way the screw joins the frame (1) and the frame (2), separated, however, by a small washer (6).

6. Fastening disposition according to claim 5 **characterized** because each nut (5) is fixed in it respective hexagonal lowering (7) letting a strong subjection and a free frame movement.
